Europäisches Patentamt

European Patent Office

Office européen des brevets

(11) Veröffentlichungsnummer: **0 517 197 A1**

# (12) EUROPÄISCHE PATENTANMELDUNG

(21) Anmeldenummer: **92109400.9**

(22) Anmeldetag: **03.06.92**

(51) Int. Cl.5: **B65G 1/137**

(30) Priorität: **04.06.91 DE 4118323**

(43) Veröffentlichungstag der Anmeldung:
**09.12.92 Patentblatt 92/50**

(84) Benannte Vertragsstaaten:
**AT CH DE ES FR GB IT LI**

(71) Anmelder: **KNAPP LOGISTIK AUTOMATION, Ges. m.b.H.**
**Günter-Knapp-Strasse 5-7**
**A-8042 Graz(AT)**

(72) Erfinder: **Mosbacher, Anton**
**Waltendorfer Hauptstrasse 111**
**A-8010 Graz(AT)**

(74) Vertreter: **Kinzebach, Werner, Dr. et al**
**Patentanwälte Reitstötter, Kinzebach und**
**Partner Sternwartstrasse 4 Postfach 86 06 49**
**W-8000 München 86(DE)**

(54) **Verfahren zum Kommissionieren.**

(57) Das Verfahren dient zum Kommissionieren vieler Stückgutsorten mit Hilfe einer rechnergesteuerten Kommissioniereinrichtung mit automatisch bedienbaren Sortenmagazinen (3), bei dem man auszuführende Kommissionieraufträge in ein Rechnersystem eingibt, mit einer Druckvorrichtung (15) zu jedem eingegebenen Auftrag einen Lieferschein (16) druckt, aus den eingegebenen Aufträgen einzelne in frei wählbarer Reihenfolge zur Bearbeitung auswählt und ihre Kommissionierung durch Anweisung an das Rechnersystem startet, jeweils für einen gestarteten Auftrag die zu diesem gehörenden Stückgüter automatisch den Sortenmagazinen entnimmt und an mindestens einer Übergabeposition (8,9) für Stückgüter in einen herbeigeführten auftragsbezogenen Kommissionierbehälter (14) überführt, den zu dem Auftrag gehörenden Lieferschein an einer Übergabeposition für Lieferscheine in den herbeigeführten Kommissionierbehälter einbringt, und den Kommissionierbehälter mit dem vollständigen Auftragsinhalt automatisch zur Warenabgabestation transportiert. Dabei druckt man die Lieferscheine erst während oder kurz nach dem Kommissionieren in der Reihenfolge der Auftragsbearbeitung, und überführt sie automatisch in die Kommissionierbehälter.

EP 0 517 197 A1

Die Erfindung betrifft ein Verfahren zum Kommissionieren vieler Stückgutsorten mit Hilfe einer rechnergesteuerten Kommissioniereinrichtung mit automatisch bedienbaren Sortenmagazinen, bei dem man auszuführende Kommissionieraufträge in ein Rechnersystem eingibt, mit einer Druckvorrichtung zu jedem eingegebenen Auftrag einen Lieferschein druckt, aus den eingegebenen Aufträgen einzelne in frei wählbarer Reihenfolge zur Bearbeitung auswählt und ihre Kommissionierung durch Anweisung an das Rechnersystem startet, jeweils für einen gestarteten Auftrag die zu diesem gehörenden Stückgüter automatisch den Sortenmagazinen entnimmt und an mindestens einer Übergabeposition für Stückgüter in einen herbeigeführten auftragsbezogenen Kommissionierbehälter überführt, den zu dem Auftrag gehörenden Lieferschein an einer Übergabeposition für Lieferscheine in den herbeigeführten Kommissionierbehälter einbringt, und den Kommissionierbehälter mit dem vollständigen Auftragsinhalt automatisch zur Warenabgabestation transportiert.

In westlichen Industrienationen sollen bei wachsender Angebotsvielfalt Kommissionieraufträge in immer kürzerer Zeit erledigt werden, zum Beispiel müssen derzeit im Pharma-, Kosmetik- und Chemikaliengroßhandel Kommissionieraufträge auf einer Menge von mehreren tausend Artikeln innerhalb weniger Sekunden bearbeitet werden. Dabei kommt stark automatisierten Kommissioniertechniken der eingangs geschilderten Art eine stets wachsende Bedeutung zu.

Als Teil eines solchen Kommissionierverfahrens ist in der Deutschen Offenlegungsschrift 32 13 119 das automatische Entnehmen der Stückgüter aus den Sortenmagazinen und ihr Sammeln in Kommissionierbehältern beschrieben. Eine vollständige Auftragserledigung umfaßt darüber hinaus noch weitere Verfahrensschritte, die nach dem Stand der Technik im wesentlichen manuell durchgeführt werden.

So werden zunächst die auszuführenden Kommissionieraufträge unter Angabe der gewünschten Stückgutsorten mit Stückzahl in ein Rechnersystem eingegeben. Mit einer Druckvorrichtung wird dann zu jedem Auftrag ein Lieferschein gedruckt, der zum Beispiel neben einer Auftragskennzeichnung eine Auflistung der gewünschten Sorten mit Stückzahl enthält. Die Kommissionierung der Aufträge erfolgt zunächst noch nicht, da die Aufträge im allgemeinen nicht in der Reihenfolge ihrer Eingabe, sondern in einer anderen, frei wählbaren, erledigt werden sollen. Dabei kann es sich zum Beispiel um die Reihenfolge abnehmender Dringlichkeit handeln. Zur weiteren Bearbeitung wählt eine Bedienungsperson aus einer Liste der eingegebenen Aufträge einzelne Aufträge in der gewünschten Reihenfolge aus, und startet deren Kommissionierung durch entsprechende Anweisungen an das Rechnersystem. Wie in der genannten Druckschrift beschrieben, werden daraufhin die zu einem Auftrag gehörenden Stückgüter den Sortenmagazinen entnommen, und, je nach Größe der Kommissioniereinrichtung, an einer oder mehreren Übergabepositionen in herbeigeführte Kommissionierbehälter überführt. Während dieses in der Druckschrift beschriebenen Vorgangs sucht eine Bedienungsperson aus einem Stapel der anfangs gedruckten Lieferscheine den zum gerade bearbeiteten Auftrag gehörenden Schein heraus, und legt ihn nach Beendigung des Kommissionierens an einer Übergabeposition für Lieferscheine in den Behälter auf die darin befindlichen Stückgüter. Die Reihenfolge der Lieferscheine im Stapel entspricht dabei der Eingabereihenfolge, und damit im allgemeinen nicht der Bearbeitungsreihenfolge. Schließlich wird der Kommissionierbehälter mit dem vollständigen Auftragsinhalt zur Warenabgabestation befördert.

Bei den geschilderten Verfahren dauert das von einer Bedienungsperson durchgeführte Heraussuchen des Lieferscheins aus dem Stapel und das Einlegen in einen Kommissionierbehälter in der Regel mehrere Sekunden. So lange noch der gesamte Kommissioniervorgang manuell durchgeführt wurde, trat dies nicht nachteilig zu Tage. Durch den Einsatz automatischer Kommissioniervorrichtungen, bei denen eine gesamte Auftragserledigung nur wenige Sekunden dauern kann, ist jedoch das Heraussuchen und Einlegen des Lieferscheins in vielen Fällen zeitbestimmend geworden. Als weiterer Nachteil kann es bei dem geschilderten Verfahren auch leicht zu Fehlzuordnungen von Lieferscheinen kommen.

Der Erfindung liegt daher die Aufgabe zugrunde, ein Verfahren der eingangs geschilderten Art so auszugestalten, daß die zum Heraussuchen und Einlegen von Lieferscheinen benötigte Zeit minimiert wird, und dabei Fehler möglichst ausgeschlossen sind.

Gelöst wird diese Aufgabe mit Hilfe eines Verfahrens der eingangs geschilderten Art, das dadurch gekennzeichnet ist, daß man die Lieferscheine erst während oder kurz nach dem Kommissionieren in der Reihenfolge der Auftragsbearbeitung druckt, und das Einbringen der Lieferscheine in die Kommissionierbehälter automatisch durchführt. Im allgemeinen Fall kann sich die Reihenfolge noch während der Auftragsbearbeitung ändern, etwa wenn es möglich ist, daß ein Kommissionierbehälter einen vor ihm laufenden Behälter überholt. In diesem Fall ist die für das Drucken der Lieferscheine maßgebliche Reihenfolge durch die Reihenfolge der Kommissionierbehälter unmittelbar vor dem Einbringen der Lieferscheine gegeben.

Vorteilhaft führt man auch das Auswählen und Starten von Aufträgen rechnergesteuert durch. Dabei wählt das Rechnersystem die Aufträge ohne manuellen Eingriff nach einem bestimmten Kriterium, zum Beispiel in der Reihenfolge abnehmender Dringlichkeit, zur Bearbeitung aus, und startet selbsttätig deren Kommissionierung. In diesem Fall wird der gesamte Kommissioniervorgang, abgesehen von einer gegebenenfalls manuellen Auftragseingabe, automatisch durchgeführt.

Vorzugsweise ordnet man die Druckvorrichtung an der Übergabeposition für Lieferscheine oberhalb der zur Aufnahme der Lieferscheine herbeigeführten Kommissionierbehälter an, führt das Drucken eines Lieferscheins nahezu synchron mit der Ankunft des zugehörigen Kommissionierbehälters aus, und überführt anschließend den Lieferschein über eine Papierzuführung aus der Druckvorrichtung in den darunter befindlichen Kommissionierbehälter. Dadurch entfällt die Notwendigkeit, Lieferscheine vor dem Einbringen in die Kommissionierbehälter in Form von Papierstapeln oder Ähnlichem bereitzuhalten.

In einer weiteren bevorzugten Ausführungsform ordnet man an der Papierzuführung einen Strichcodeleser an, druckt auf die Lieferscheine auch jeweils eine Auftragskennnummer in Form eines Strichcodes, liest diese beim Ausgeben eines Lieferscheins aus der Druckvorrichtung mit dem Strichcodeleser, und prüft sie auf Identität mit der Kennummer des Auftrags, auf den der den Lieferschein aufnehmende Kommissionierbehälter bezogen ist. Vorzugsweise versieht man die Kommissionierbehälter mit Behälterkennnummern in Form von Strichcodes, ordnet an der Übergabeposition für Lieferscheine einen weiteren Strichcodeleser an und liest mit ihm jeweils die Behälterkennnummer des herbeigeführten Kommissionierbehälters, druckt auf die Lieferscheine jeweils die Behälterkennnummer des dem Auftrag zugeordneten Kommissionierbehälters in Form eines Strichcodes und in dezimaler Darstellung, liest diesen wie die Auftragskennnummer und prüft die beiden gelesenen Behälterkennnummern auf Identität. Durch dieses Vergleichen der Kennummern der Lieferscheine mit denen der Kommissionierbehälter können Fehlzuordnungen mit Sicherheit erkannt und korrigiert werden. Vorteilhaft prüft man beim Entnehmen der Stückgüter aus den Sortenmagazinen, ob alle abgefragten Artikel eines Auftrags in der gewünschten Stückzahl entnommen werden, druckt im Fall einer unvollständigen Kommissionierung zusätzlich zum Lieferschein ein Fehlermeldepapier und überführt dieses, wie den Lieferschein in den Kommissionierbehälter.

Wie die vorstehenden Ausführungen zeigen, hat die Erfindung den Vorteil, daß das zeitraubende und fehlerträchtige Heraussuchen der Lieferscheine entfällt, und ihr Einlegen in die Kommissionierbehälter automatisch durchgeführt wird. Damit kann der gesamte Kommissioniervorgang vollautomatisch und somit schneller, mit geringerem Personalaufwand und praktisch frei von Bedienungsfehlern durchgeführt werden.

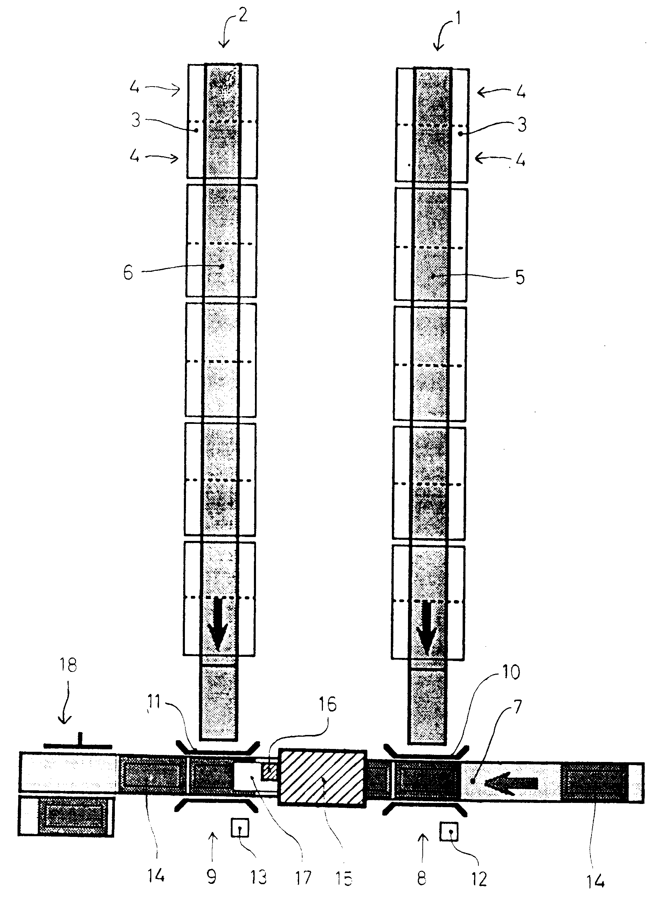

Im folgenden wird das erfindungsgemäße Verfahren anhand eines bevorzugten Ausführungsbeispiels unter Bezugnahme auf die angefügte Figur näher beschrieben. Die Figur zeigt eine schematische Aufsicht auf eine Vorrichtung zur Durchführung dieses Verfahrens.

In der Figur dargestellt ist eine Kommissioniervorrichtung mit zwei Zeilen 1,2 automatisch bedienbarer Sortenmagazine 3, die in Sektoren 4 gruppiert sind. In den Magazinzeilen 1,2 führen mittig unter den Sortenmagazinen 3 angeordnete Sammelbänder 5,6 rechtwinkelig zu einem Behälterband 7, und bilden dort Übergabepositionen 8,9 für Stückgut. Die Förderrichtungen der Bänder sind durch Pfeile gekennzeichnet. An den Übergabepositionen 8,9 ist jeweils eine Behälterklemmvorrichtung 10,11 und ein Behälter-Strichcodeleser 12,13 angeordnet. Auf dem Behälterband 7 befinden sich mehrere Kommissionierbehälter 14. In der Nähe der Übergabeposition 9 ist ein schneller Seitendrucker 15 mit einer Druckgeschwindigkeit von 30 Seiten pro Minute so hoch über dem Behälterband 7 angeordnet, daß auf dem Behälterband 7 transportierte Kommissionierbehälter 14 unter dem Drucker 15 hindurchgeführt werden können. In Längsrichtung des Behälterbandes 7 gesehen, ist der Drucker 15 so plaziert, daß ein aus ihm über eine Papierzuführung ausgegebener Lieferschein 16 in einen an der Übergabeposition 9 befindlichen Kommissionierbehälter 14 fällt; die Übergabeposition für Lieferscheine fällt somit bei der gezeigten Vorrichtung mit der in Förderrichtung letzten Übergabeposition für Stückgüter zusammen. An der Papierzuführung befindet sich ein Lieferschein-Strichcodeleser 17. In Förderrichtung gesehen hinter dem Drucker 15 liegt eine Kontrollstation 18, bei der Kommissionierbehälter 14 vom Behälterband 7 ausgesteuert werden können.

Nicht gezeigt in der Figur ist das Rechnersystem. Es umfaßt einen Hostrechner, einen Lieferschein-Rechner und einen Kommissionierrechner, der wiederum aus einem Kommissionier-Leitrechner und, für je zwei Magazinsektoren 4 einem Kommissionier-Sektorrechner besteht. Alle Rechner sind miteinander durch ein Netzwerk verbunden, der Lieferschein-Rechner ist mit dem Drucker 15 und dem Strichcodeleser 17 verbunden. Der Hostrechner dient der anfänglichen Entgegennahme der Auftragsdaten, der Kommissionierrechner steuert die Betätigung der Sortenmagazine 3, der Sammelbänder 5,6 und das Behälterband 7 einschließlich der Klemmvorrichtungen 10,11. Der Lieferschein-Rechner steuert den Drucker 15 und den Strichcodeleser 17 an, und dient der vorübergehenden Speicherung von Lieferschein-Daten.

Ein Auftrag wird nach dem erfindungsgemäßen Verfahren wie folgt abgewickelt: Zunächst werden die Auftragsdaten in den Hostrechner eingegeben; hierbei handelt es sich um eine Auftragskennzeichnung und um die einzelnen abgefragten Stückgutsorten mit gewünschter Stückzahl. Dem Auftrag wird vom Hostrechner eine Auftragskennnummer zugeordnet, anschließend werden die Auftragsdaten zum Kommissionierrechner und zum Lieferschein-Rechner geschickt und dort gespeichert. Eine Bedienungsperson wählt aus einer Liste der zu bearbeitenden Aufträge den dringlichsten Auftrag aus und startet ihn durch eine Anweisung an den Kommissionierrechner. Ein freier Kommissionierbehälter 14 wird rechnergesteuert diesem Auftrag zugeordnet, automatisch auf dem Behälterband 7 zur Übergabeposition 8 geführt und dort von der Klemmvorrichtung 9 festgehalten. Zur Vermeidung von Synchronisationsfehlern wird eine auf dem Behälter 14 in Form eines Strichcodes aufgebrachte Behälterkennnummer vom Behälter-Strichcodeleser 12 gelesen und überprüft, dann werden die im Auftrag abgefragten Stückgüter der Magazinzeile 1 in der benötigten Menge aus den Sortenmagazinen 3 automatisch ausgeworfen und auf das Sammelband 5 überführt. Dabei wird mit Hilfe optischer Sensoren in den Ausgabebereichen der Sortenmagazine 3 festgestellt, ob der Auftrag vollständig ausgeführt wird. Die ausgeworfenen Artikel werden dann vom Sammelband 5 zur Übergabeposition 8 befördert und in den dort festgeklemmten Kommissionierbehälter 14 gefüllt. Die Klemmung wird freigegeben, und der Behälter 14 wird auf dem Behälterband 7 zur zweiten Übergabeposition 9 befördert. Dort wiederholen sich sinngemäß die Verfahrensschritte des Festklemmens des Behälters 14, des Lesens und Prüfens der Behälterkennnummer, des Auswerfens, Beförderns und Einfüllens der Stückgüter, und des Überprüfens der Auftragserledigung auf Vollständigkeit. Nach Ankunft des Behälters 14 an der Übergabeposition 9 druckt der Seitendrucker 15 innerhalb von zwei Sekunden den Lieferschein 16, der im wesentlichen neben einer Auftragskennzeichnung eine Liste der abgefragten Artikel mit Stückzahl, eine Rechnung und außerdem die Auftragskennnummer und die Kennnummer des dem Auftrag zugeordneten Behälters 14 in Form von Strichcodes enthält, und gibt ihn über die Papierzuführung aus. Dabei werden die beiden strichcodierten Kennnummern von dem Strichcodeleser 17 gelesen. In der Zwischenzeit wurden die der Magazinzeile 2 entnommenen Stückgüter in den Behälter 14 überführt, der Lieferschein 16 fällt dann in den Behälter 14, und kommt so oben auf den Stückgütern des gesamten Auftrags zu liegen.

Durch einen Vergleich der vom Lieferschein abgelesenen Kennnummern mit der vom Behälter 14 abgelesenen Behälterkennnummer bzw. der dieser zugeordneten Auftragskennnummer durch das Rechnersystem wird die richtige Zuordnung zwischen dem Behälter 14 und dem Auftragsinhalt und dem Lieferschein 16 überprüft. Im Fall einer falschen Zuordnung führt das Rechnersystem selbsttätig eine Resynchronisation durch.

Im Fall einer unvollständigen Auftragserledigung wird nach dem Lieferschein 16 ein Fehlermeldepapier gedruckt, das eine Liste der fehlenden Artikel enthält, und wie der Lieferschein 16 in den Behälter 14 eingebracht. Anschließend wird der Behälter 14 von der Klemmvorrichtung 11 freigegeben, zur Kontrollstation 18 und im Regelfall weiter zur Warenabgabestation befördert; nur Kommissionierbehälter 14 mit Fehlermeldeblatt werden vorübergehend an der Kontrollstation 18 ausgesteuert, das heißt vom Behälterband 7 genommen. Die fehlenden Artikel werden dann manuell ergänzt.

Mit dem Starten eines weiteren Auftrags muß nicht etwa bis zur Erledigung des betrachteten Auftrags gewartet werden; vielmehr können weitere Aufträge bereits unmittelbar nach dem Starten des betrachteten Auftrags gestartet werden.

Mit der Kommissionierung des nächsten Auftrags wird dann sofort an der ersten Übergabeposition 8 begonnen, nachdem der Behälter 14 des betrachteten Auftrags diese Übergabeposition freigegeben hat, und so weiter. Diese überlappende Auftragsbearbeitung ist in der Figur durch die Anwesenheit mehrerer Behälter 14 angedeutet. Bei überlappender Auftragsbearbeitung wird mit der gezeigten Kommissioniervorrichtung unter Anwendung des beschriebenen erfindungsgemäßen Verfahrens eine Leistung von ungefähr 20 Auftragserledigungen pro Minute erzielt.

**Patentansprüche**

1. Verfahren zum Kommissionieren vieler Stückgutsorten mit Hilfe einer rechnergesteuerten Kommissioniereinrichtung mit automatisch bedienbaren Sortenmagazinen, bei dem man

   auszuführende Kommissionieraufträge in ein Rechnersystem eingibt,

   mit einer Druckvorrichtung zu jedem eingegebenen Auftrag einen Lieferschein druckt,

   aus den eingegebenen Aufträgen einzelne in frei wählbarer Reihenfolge zur Bearbeitung auswählt und ihre Kommissionierung durch Anweisung an das Rechnersystem startet,

   jeweils für einen gestarteten Auftrag die zu diesem gehörenden Stückgüter automatisch den Sortenmagazinen entnimmt und an mindestens einer Übegabeposition für Stückgüter in einen herbeigeführten auftragsbezogenen Kommissionierbehälter überführt,

den zu dem Auftrag gehörenden Lieferschein an einer Übergabeposition für Lieferscheine in den herbeigeführten Kommissionierbehälter einbringt, und

den Kommissionierbehälter mit dem vollständigen Auftragsinhalt automatisch zur Warenabnahmestation transportiert,

**dadurch gekennzeichnet,** daß

man die Lieferscheine erst während oder kurz nach dem Kommissionieren in der Reihenfolge der Auftragsbearbeitung druckt, und automatisch

in die Kommissionierbehälter überführt.

2. Verfahren nach Anspruch 1,
dadurch gekennzeichnet, daß
man das Auswählen und Starten von Aufträgen rechnergesteuert durchführt.

3. Verfahren nach Anspruch 1 oder 2,
dadurch gekennzeichnet, daß
man die Druckvorrichtung an der Übergabeposition für Lieferscheine oberhalb der zur Aufnahme der Papiere herbeigeführten Kommissionierbehälter anordnet,

das Drucken eines Lieferscheins nahezu synchron mit der Ankunft des zugehörigen Kommissionierbehälters an der Übergabeposition ausführt, und

anschließend den Lieferschein über eine Papierzuführung aus der Druckvorrichtung in den darunter befindlichen Kommissionierbehälter überführt.

4. Verfahren nach Anspruch 3,
dadurch gekennzeichnet, daß
man an der Papierzuführung einen Strichcodeleser anordnet,

auf die Lieferscheine auch jeweils eine Auftragskennnummer in Form eines Strichcodes druckt,

diese beim Ausgeben eines Lieferscheins aus der Druckvorrichtung mit dem Strichcodeleser liest, und

auf Identität mit der Kennummer des Auftrags prüft, auf den der den Lieferschein aufnehmende Kommissionierbehälter bezogen ist.

5. Verfahren nach Anspruch 4,
dadurch gekennzeichnet, daß
man die Kommissionierbehälter mit Behälterkennummern in Form von Strichcodes versieht,

an der Übergabeposition für Lieferscheine einen weiteren Strichcodeleser anordnet und mit ihm jeweils die Behälterkennummer des herbeigeführten Kommissionierbehälters liest,

auf die Lieferscheine jeweils die Kennummer des dem Auftrag zugeordneten Kommissionierbehälters in Form eines Strichcodes und in dezimaler Darstellung druckt,

diese wie die Auftragskennummer liest, und

die beiden gelesenen Behälterkennummern auf Identität prüft.

6. Verfahren nach einem der Ansprüche 3 bis 5,
dadurch gekennzeichnet, daß

man beim Entnehmen der Stückgüter aus den Sortenmagazinen prüft, ob alle abgefragten Artikel eines Auftrags in der gewünschten Stückzahl entnommen werden,

im Fall einer unvollständigen Kommissionierung zusätzlich zum Lieferschein ein Fehlermeldepapier druckt und, wie jenes, in den Kommissionierbehälter überführt.

Europäisches
Patentamt

# EUROPÄISCHER RECHERCHENBERICHT

Nummer der Anmeldung

EP 92 10 9400

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 736 197 (SCHLICH) <br> * das ganze Dokument * <br> --- | 1,2 | B65G1/137 |
| D,A | DE-A-3 213 119 (ING. GÜNTER KNAPP) <br> * Seite 14, Zeile 6 - Seite 19, Zeile 27; Abbildungen 1A-4 * <br> --- | 1,2 | |
| A | DE-A-3 711 237 (ING. GÜNTER KNAPP) <br> * Spalte 4, Zeile 24 - Zeile 42 * <br> --- | 1 | |
| A | DE-A-3 630 095 (SIEMAG TRANSPLAN) <br> * Ansprüche 1,6-8 * <br> ----- | 1,6 | |

| | | | RECHERCHIERTE SACHGEBIETE (Int. Cl.5) |
|---|---|---|---|
| | | | B65G |

Der vorliegende Recherchenbericht wurde für alle Patentansprüche erstellt

| Recherchenort | Abschlußdatum der Recherche | Prüfer |
|---|---|---|
| BERLIN | 15 SEPTEMBER 1992 | SIMON J. |